# EUROPEAN PATENT APPLICATION

(11) **EP 1 516 714 A2**
(43) Date of publication of application: **23.03.2005**
(21) Application number: 04253790.2
(22) Date of filing: 24.06.2004
(51) Int. Cl.: B29C 70/48

(54) **Liquid supply system into a preform**

(30) Priority: 24.06.2003 GB 0314691
(71) Applicant: Trysome Limited, Woking, Surrey GU21 5JY (GB)
(72) Inventor: Backhouse, Robert Charles, West Sussex GU28 9HW (GB)
(74) Representative: Slingsby, Philip Roy

(57) **Abstract**

Apparatus for supplying a liquid to be infused into an absorptive component (2), the apparatus comprising a container holding liquid (6), the container (4) being re-configurable to reduce its internal volume on application of external pressure and being substantially fluid-sealed except for an outlet for the liquid means arranged to cause the liquid to flow from the container through the outlet into the component.

## Description

The present invention relates to an apparatus and a method for supplying a liquid to be infused into an absorptive component, particularly but not exclusively a liquid resin.

In the field of composite component manufacturing an open resin supply container is often utilised to provide a reservoir of liquid for infusion into a component such as an encapsulated fibrous assembly under the action of an applied vacuum. Such an assembly may be used as a preform in the manufacture of a composite vehicle component. The supply container is typically used for mixing the resin where the system is a two-component system. Alternatively such a container may be used to contain a single component or a previously mixed two-component system. The system is typically but not exclusively an epoxy resin.

A tube or similar is typically placed in the lowest point of the container so that under the action of the vacuum applied to the encapsulated fibrous assembly resin flows through the tube and into the fibrous assembly. Once in the assembly the resin empties from the container and through the fibrous assembly causing the assembly to be wetted. Once the assembly is fully wetted the resin supply is stopped by clamping shut the resin supply tube or by provision of a suitable in-line valve in the said tube. Vacuum is maintained on the component during gelation and curing of the resin so that the resin distribution and compaction of the wetted fibrous reinforcement is equilibrated.

The point at which the resin supply is shut is critical to the characteristics of the moulded component and both insufficient and excess resin supply will often result in a defective component. The shutting of the resin supply in known systems is typically manually controlled and hence subject to human error and judgement. Thus such systems suffer from the problem that unless an operator shuts off the valve at exactly the correct moment, the component is likely to be defective and hence will need to be discarded. Discarding of such components is costly.

One known solution to this problem is to use an automated valve connected to a resin dispensing machine which meters controlled quantities of liquid resin into the encapsulated fibrous assembly and shuts the supply once the desired quantity has flowed into the assembly. One disadvantage of this solution is that a number of expensive components are required so it is less cost-effective than the simple open-reservoir system described above. Another disadvantage is that pumping the resin into the assembly can result in too much resin flowing into the assembly too quickly which has a negative effect on component quality.

It would be desirable to provide a cost-effective means of supplying liquid into a component that maintains component quality and minimises the risk of needing to discard components.

According to a first aspect of the present invention there is provided an apparatus for supplying a liquid to be infused into an absorptive component, the apparatus comprising: a container holding liquid, the container being re-configurable to reduce its internal volume on application of external pressure and being substantially fluid-sealed except for an outlet for the liquid; means arranged to cause the liquid to flow from the container through the outlet into the component.

According to a second aspect of the present invention there is provided a method of supplying a liquid to be infused into an absorptive component, the method comprising the steps of: putting liquid in a container the container being re-configurable to reduce its internal volume on application of external pressure and being substantially fluid-sealed except for an outlet for the liquid; causing the liquid to flow from the container through the outlet into the component.

The component is preferably a fibrous component, most preferably a component formed of high-strength fibres such as glass fibre, carbon fibre an aramid polymer or the like. The fibres are preferably flexible. The fibres are preferably disposed in mesh, woven or knitted sheets. The component may be a preform. The liquid is preferably capable of curing or otherwise hardening to provide rigidity to the fibres. The liquid may be a resin such as an epoxy resin. On hardening of the liquid the component together with the hardened liquid preferably constitutes a high-strength structure.

Embodiments of the invention will now be described, by way of example only, with reference to the accompanying drawings in which :
Figure 1 shows a prior art open resin supply system;
Figure 2 shows a resin supply system in accordance with a first embodiment of the invention;
Figure 3 shows a resin supply system in accordance with a second embodiment of the invention; and
Figure 4 shows a bag suitable for use in the systems of figures 2 and 3.

In the figures like reference numerals indicate like parts.

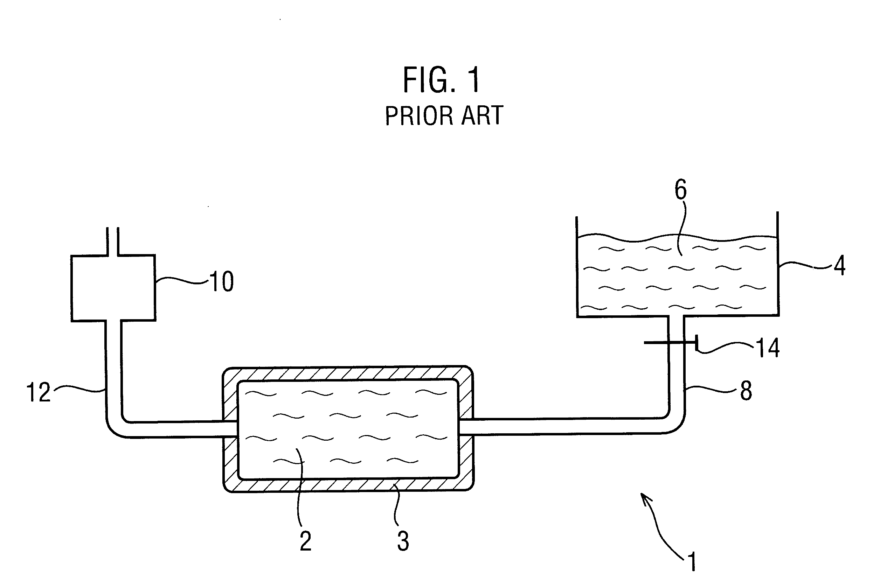

Referring firstly to figure 1, there is shown a prior art system 1 for supplying resin to an encapsulated fibrous assembly. The assembly is shown by reference numeral 2 and is a preform to a vehicle component. The preform 2 is shown to be held within a mould 3. The mould 3 seals around the preform 2, for example with a hermetic seal, so as to minimise air ingression into the preform 2. Thus the preform 2 is in a vacuum bag. The system comprises an open resin supply container 4 containing resin 6. A tube 8 is shown to emerge from the bottom of the container 4 and feed into one side of the mould 3 and hence into the preform 2. The tube has an in-line valve 14. A vacuum pump 10 is connected to the other side of the preform 2 via a tube 12.

In operation, the in-line valve 14 is opened and the vacuum pump 10 is switched on so that it applies a vacuum to the preform 2. Under the action of the vacuum resin 6 flows through the tube 8 and into the preform 2. Thus the resin 6 empties from the container 4 and through the preform 2 causing the preform 2 to be wetted. Once the preform 2 is fully wetted the resin supply is stopped by shutting the in-line valve 14 in the tube 8. Some resin 6 remains in the container 4 at this stage.

As previously explained, the ability of the system of figure 1 to produce a high-quality composite component is limited by the skill and accuracy of a person operating the in-line valve 14.

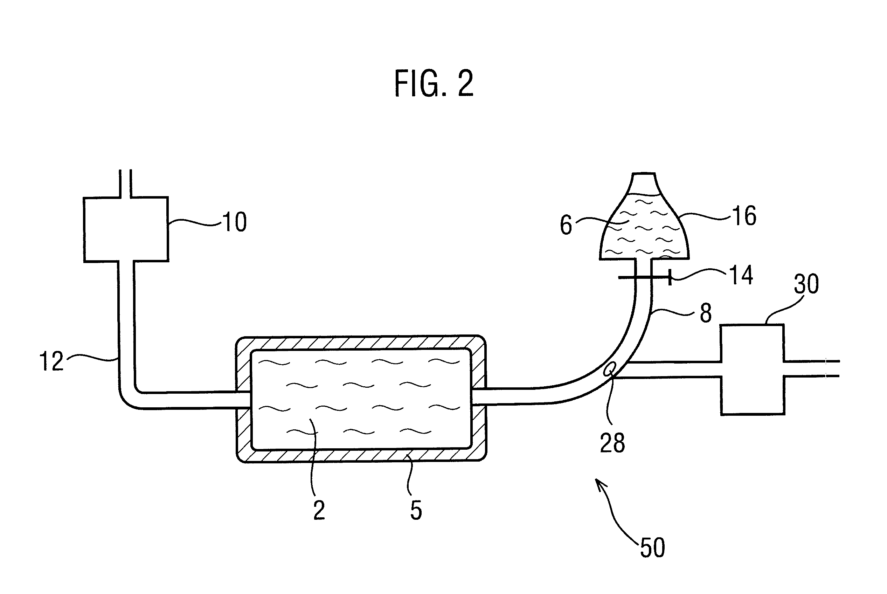

Turning now to figure 2, there is shown an improved system 50 in accordance with a first embodiment of the invention. In this system 50 the open container 4 is replaced by a flexible polymeric bag 16 with the resin supply tube 8 emerging from its lower end. The outlet of the bag 16 has an in-line valve 14. At its upper end, the bag 16 is sealed. The preform 2 is held under a flexible membrane 5.

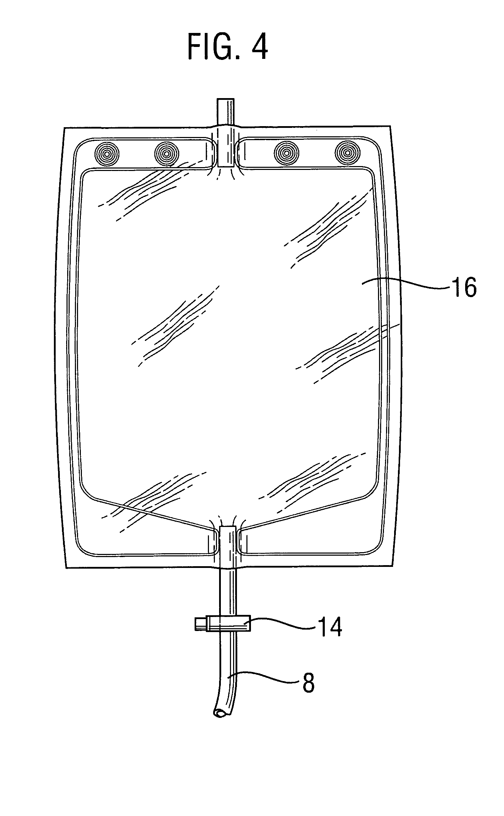

Examples of commercially available polymeric bags suitable for use in the system of figure 2 are sold for medical applications as catheter bags or blood plasma bags or the like. An example of such a bag is shown in Figure 4. The bag is typically made from polyeurathane or a similar flexible polymeric material which is resistant to the environmental conditions to which it will be exposed during the process of filling, emptying and curing in an oven, as discussed below. One advantage of the bag 16 over the prior art open container arrangement is that the valve 14 can be used to keep liquid 6 in the bag 16 even when no supply tube 8 is fitted. Thus the bag with a quantity of liquid in it is portable and can be carried to the preform 2 which may be quite bulky and difficult to move around. The outlet of the bag is designed such that a supply tube 8 can be fitted in a removeable manner such that the bag 16 can be refilled and used with another supply tube.

Finally, there is shown on the tube 8, in between the in-line valve 14 and the preform 2, a membrane 28, connected to a second vacuum pump 30. The membrane 28 is a supported patch of gas permeable membrane and is in contact with the resin contained in the tube 8 during operation of the system 50. The membrane is located on the opposing side of the tube 8 to the resin 6 i.e. on the outside of the tube 8. The membrane could be located elsewhere, for example on the bag 16, but it is most conveniently located on the tube 8.

Prior to operation of the system 50 the polymeric bag 16 is firstly evacuated to expel air from the bag 16. This is done either by means of a tube in the top of the bag 16 (not shown) which is used to apply a vacuum to the bag 16, or using tube 8 prior to connecting it to the preform 2. A pre-determined quantity of liquid resin 6 is preferably de-gassed to remove entrapped air and volatiles that may adversely affect the quality of the final preform. The pre-determined quantity is calculated as that which is required to fully wet but not over-wet the preform 2. The quantity is calculated using the Fibre Volume Fraction (V_{f}), or Resin Weight Fraction (Wᵣ) of the preform 2. The bag 16 is then filled with the predetermined quantity of liquid resin 6 and the bag 16 is then sealed by closing off the above-mentioned tube. The tube 8 is closed at this stage since the in-line valve 14 is shut. As explained above, the sealed bag is transportable in this state so that it can be filled with liquid by one person in one location and then taken to another location for use by a second person. In this state, the user does not need to measure out the required volume of liquid as in the prior art system of figure 1, but can simply connect the outlet of the bag 16 to the supply tube 8 and then connect the supply tube 8 to the component 2. The bag 16 could be transported with a supply tube 8 fitted if this were more convenient.

The term "resin" is used herein as an example of a liquid to be used for wetting a fibrous assembly. It is common for such an assembly to be wetted with a liquid such as a resin that can subsequently be cured to strengthen the assembly. Such a resin may contain more than one component and these can either be pre-mixed or mixed in the bag 16. However, the system 50 is applicable to other types of liquid that are to be infused into an absorptive component.

The type of components which are particularly suited for manufacture using the following technique are structures comprising high-strength fibres. Certain resins are capable of being infused into such a component, wherein the resin can be subsequently cured, thus augmenting the strength of the fibres and resulting in a high-strength composite component.

In operation a vacuum is applied to the preform 2 by switching on the vacuum pump 10. Subsequent opening of the in-line valve 14 allows resin 6 to flow from the polymeric bag 16, through the tube 8 and into the preform 2. During the filling process, under the action of hydrostatic atmospheric pressure only, resin 6 flows from the bag 16 into the preform 2. At this point, the bag 16 is preferably empty and the preform 2 fully wetted and equilibrated. The exact wetting status of the preform 2 depends on whether the correct pre-determined quantity of resin 6 was put into the bag 16. However, the system 50 is advantageous in that even if more resin 6 than the ideal quantity has been put in the bag 16, the excess resin will simply be drawn into the vacuum pump 10 and expelled and the quality of the preform 2 will not be significantly affected. Features which ensure that quality of the preform 2 is not prejudiced are that no air may flow into the preform 2 as the bag 16 is sealed and previously evacuated and no element of human contact has been required to monitor or shut the resin supply. These features are enhanced by provision of a good seal around the preform 2 by the flexible membrane 5 so that air can not ingress directly into the preform 2 and hence the vacuum pump 10 applies as close as possible to a full vacuum to the preform 2. By contrast in the prior art system of figure 1, if the operator forgets to switch off the vacuum pump 10, air will be drawn into the preform 2 and it will consequently be unusable.

If too little resin is put in the bag the preform 2 will be incompletely wetted and unusable. However, this is unlikely in practice since the correct quantity of resin is calculable as explained above.

The resulting wetted preform 2 is subsequently heated so as to crosslink the resin system, followed by de-moulding from the flexible membrane 5 to reveal the finished/semi-finished component. The polymeric bag 16 is then cut from the component and discarded.

During wetting of the preform 2, entrapped air can continue to be removed from the resin 6 through the membrane 28 on the tube 8. This is done by switching on the vacuum pump 30 such that entrapped air is drawn by vacuum through the gas permeable membrane but does not significantly impede the flow of resin 6 through the tube 8. This feature is however not essential since the bag 16 and the resin 6 have both been previously evacuated as explained above.

It will be understood by those skilled in the art that application of a vacuum using the vacuum pump 10 is not absolutely essential when the components are configured as in figure 2 since the bag 16 is held at a higher level than the component 2. Thus the height difference results in hydrostatic pressure causing liquid 6 to flow from the bag 16 down into the component 2. However, application of a vacuum is desirable to increase flow speed, particularly if in practice the bag 16 and the component 2 are conveniently situated at similar height levels.

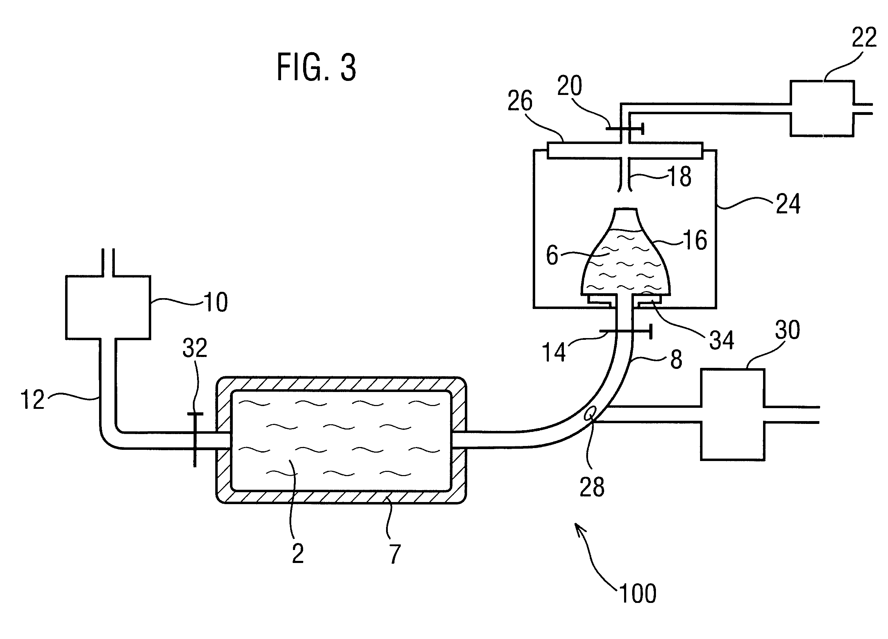

Turning now to figure 3, there is shown a second embodiment of the invention, which is suitable for producing, for example, a resin transfer moulded automotive exterior panel. The figure shows a system 100, which is similar to the system 50 of figure 2 but which contains some extra components.

The bag 16, together with a part of the tube 8 proximate to the bag 16, is located in a pressure vessel 24. The pressure vessel 24 seals around the tube 8. At the top of the pressure vessel 24 is a lid 26 which can be opened for access to the bag 16 but is provided with a seal such as a hermetic seal, so that when the lid 26 is closed, the pressure vessel 24 is substantially fluid-sealed and a desired pressure can be maintained in the vessel 24. Another tube 18 passes through the lid 26, via a pressure controller 20, to a second pump 22. When the pump 22 is not in operation, the interior of the pressure vessel 24 is at atmospheric pressure. The bag 16 sits on a set of weighing scales 24. The preform 2 is surrounded by a matched closed rigid mould tool and the tube 12 is provided with a valve 32.

Since the bag 16 is disposed in the pressure vessel 24, the hydrostatic pressure applied to the bag 16 is controllable so as to provide a greater than normal atmospheric pressure during resin transfer. By varying the pressure, the flow rate of resin 6 into the preform 2 is varied. The pressure in the vessel 24 and hence the pressure applied to the exterior of the bag 16 is varied by means of the pump 22. If the pump 22 is switched on and the valve 20 opened, pressurised air will be introduced into the pressure vessel 24 through the tube 18 and the pressure inside will increase to the level desired by appropriate setting of the pressure controller 24 which in turn varies the pumping rate of the pump 22. If the pressure is set to be greater than atmospheric pressure, the flow rate will be higher. Varying the flow rate may be desirable to improve the quality and manufacturing cycle time of the resulting composite component depending on the particular preform materials and resin being used.

In this embodiment the pressure in the pressure vessel 24 is adaptively controlled by feedback from the scales 24. During transfer of the resin 6 into the preform 2 the bag 16 is continuously weighed and the result fed to a feedback control circuit (not shown). Thus the mass flow rate of resin 6 from the bag 16 (and hence into the preform 2) is monitored and via feed-back to the pressure controller 24 allows the flow rate to be controlled by varying the pressure.

As in the first embodiment, prior to operation of the system 100 the polymeric bag 16 is firstly evacuated to expel air from the bag 16. The lid 26 of the pressure vessel 24 is also shut. In operation the valve 32 is opened and a vacuum is applied to the preform 2 by switching on the vacuum pump 10. Subsequent opening of the in-line valve 14 allows resin 6 to flow from the polymeric bag 16, through the tube 8 and into the preform 2. During the filling process the bag 16 gradually empties and collapses until there is equilibrium of pressure acting on both the bag 16 and the wetted preform 2.

It can be understood that in this embodiment application of a vacuum to the preform 2 is not essential since the resin is pumped into the preform 2. However a vacuum is applied since it may be beneficial to further increase the flow rate and eliminate any entrapped air from the preform 2. The valve 32 is required on the outlet tube 12 so that equilibrium of pressure is attained in the pressure vessel 24 and in the mould tool 7 and thus so that the resin does not continue to flow out. This valve 32 is not required in the first embodiment which uses the flexible membrane 5 and no pressure vessel, as hydrostatic atmospheric pressure has the same effect.

It will be understood by those skilled in the art that the second embodiment is a form of Resin Transfer Moulding (RTM) i.e. a process of transferring resin under elevated pressure into a fibrous assembly in a closed mould. The provision of a rigid mould 7 which can withstand the pressures involved is preferable in this technique Thus it can be understood that provision of a pressure vessel is not essential since the system works by simply having the bag 16 in atmospheric pressure as in the first embodiment. However, if it is desired to vary the pressure applied to the exterior of the bag 16 so as to modify the flow-rate of resin 6 to the assembly 2, an alternative to a pressure vessel is to provide a positive head of pressure by raising the relative height of the bag 16 to the preform 2.

It can further be understood that it is not essential for the resin 6 to be contained in a wholly flexible bag as such. Other suitable containers could be used provided they are sealable and are re-configurable i.e. have at least one flexible or mobile outer surface on which pressure can act. For example, a syringe could be used by filling its cylinder with the liquid and allowing hydrostatic pressure or artificially elevated pressure to move the piston, thus gradually causing the liquid to flow out of the syringe and into the component.

Instead of providing an in-line valve 14 on the bag 16, the outlet of the bag 16 or the exterior of the tube 8 could be clamped and then un-clamped to allow flow of resin 6. An advantage of having a valve or clamp on the bag itself is that it increases portability of the filled bag, as explained above. It would be possible to fit the bag 16 directly to the component 2 without the need for the supply tube 8, but using the supply tube may be easier depending on the desired relative locations of the component 2 and the bag 16 for practical purposes. It is also not essential to de-gas the resin prior to use, but it is preferable for quality purposes, as is pre-evacuation of the bag 16. Means other than scales could be used to weigh the resin in the second embodiment, or the entire pressure vessel could be weighed.

The applicant draws attention to the fact that the present invention may include any feature or combination of features disclosed herein either implicitly or explicitly or any generalisation thereof, without limitation to the scope of any of the present claims. In view of the foregoing description it will be evident to a person skilled in the art that various modifications may be made within the scope of the invention.

## Claims

1. Apparatus for supplying a liquid to be infused into an absorptive component, the apparatus comprising:
a container holding liquid, the container being re-configurable to reduce its internal volume on application of external pressure and being substantially fluid-sealed except for an outlet for the liquid;
means arranged to cause the liquid to flow from the container through the outlet into the component.

2. Apparatus according to claim 1, wherein the container contains substantially no gas.

3. Apparatus according to claim 1 or claim 2, wherein the component is disposed in a substantially fluid-sealed mould.

4. Apparatus according to any preceding claim, further comprising a valve disposed in the outlet and which is openable for allowing flow of liquid from the container to the component and shuttable for preventing flow of liquid from the container to the component.

5. Apparatus according to any of claims 1 to 3, further comprising a clamp disposed on the outlet and which is releasable for allowing flow of liquid from the container to the component and can be tightened around the supply tube for preventing flow of liquid from the container to the component.

6. Apparatus according to any preceding claim, wherein the outlet is configured such that a supply tube can be removeably fitted to the outlet such that liquid can flow from the container through the supply tube and into the component.

7. Apparatus according to any preceding claim, wherein the container is a bag.

8. Apparatus according to claim 7, wherein the container is made of a polymeric material.

9. Apparatus according to any preceding claim, arranged such that liquid can flow from the container into the component under the action of hydrostatic pressure acting on the exterior of the container.

10. Apparatus according to claim 9, as dependent on claim 3, wherein the mould is flexible.

11. Apparatus according to any of claims 1 to 9, further comprising a means arranged to exert a pressure on the exterior of the container so as to control the flow rate of liquid from the container into the component.

12. Apparatus according to claim 11, wherein the said means is capable of exerting a variable pressure on the exterior of the container, thus enabling the flow rate of the liquid from the container into the component to be varied.

13. Apparatus according to claim 11 or claim 12 wherein the said means is a pressure vessel in which the container is located.

14. Apparatus according to claim 12 or claim 13, wherein the said means is arranged to vary the pressure exerted in dependence on the amount of liquid that has flowed out of the container.

15. Apparatus according to claim 14, further comprising a means for measuring the amount of liquid that has flowed out of the container.

16. Apparatus according to claim 15, wherein the said means for measuring the amount of liquid is a means of weighing the liquid in the container.

17. Apparatus according to any of claims 11 to 16, as dependent on claim 3, wherein the mould is substantially rigid.

18. Apparatus according to any preceding claim, wherein the container is provided with a membrane through which trapped gas may be removed from the liquid.

19. Apparatus according to any of claims 6 to 17, wherein the supply tube is provided with a membrane through which trapped gas may be removed from the liquid.

20. Apparatus according to any preceding claim, further comprising a vacuum pump arranged to apply a substantial vacuum across the component.

21. A method of supplying a liquid to be infused into an absorptive component, the method comprising causing liquid to flow into the component from a container that is re-configurable to reduce its internal volume on application of external pressure and that is substantially fluid-sealed except for an outlet for the liquid.

22. A method according to claim 21, comprising the further step of removing substantially all gas from the container.

23. A method according to claim 21 or claim 22, comprising the further step of, prior to causing the liquid to flow from the container into the component, putting the component in a substantially fluid-sealed mould.

24. A method according to any of claims 21 to 23, wherein the step of putting liquid in the container comprises putting a predetermined quantity of liquid in the container.

25. A method according to claim 24, wherein the predetermined quantity is calculated as being an amount of liquid to substantially fully wet the component.

26. A method according to any of claims 21 to 25, comprising the further steps of fitting one end of a removeable supply tube to the outlet of the container and disposing the other end of the supply tube such that the liquid flows from the container via the supply tube to the component.

27. A method according to any of claims 21 to 26, comprising the further step of de-gassing the liquid to substantially remove trapped air and other volatile substances.

28. A method according to claim 27, wherein the step of de-gassing the liquid is carried out through a membrane on the container.

29. A method according to claim 27, as dependent on claim 26, wherein the step of de-gassing the liquid is carried out through a membrane on the supply tube.

30. A method according to any of claims 21 to 29, comprising the further step of exerting a pressure on the exterior of the container so as to control the flow rate of liquid from the container into the component.

31. A method according to claim 30, wherein the step of exerting a pressure comprises exerting a variable pressure on the exterior of the container, thus enabling the flow rate of the liquid from the container into the component to be varied.

32. A method according to claim 30 or claim 31, comprising the further step of putting the container in a pressure vessel arranged to exert the said pressure on the container.

33. A method according to claim 31 or claim 32, wherein the pressure exerted is varied in dependence on the amount of liquid that has flowed out of the container.

34. A method according to claim 33, comprising the further step of measuring the amount of liquid that has flowed out of the container.

35. A method according to claim 34, wherein the step of measuring the amount of liquid is carried out by weighing the liquid in the container.

36. A method according to any of claims 21 to 35, comprising the further step of applying a vacuum across the component.

37. A method according to any of claims 21 to 36, comprising the further step of regulating the flow of liquid from the container to the component by operating a valve or clamp disposed on the outlet to the container.

38. A method according to any of claims 21 to 37 suitable for application to a fibrous component.

39. Apparatus substantially as herein described with reference to the accompanying drawings.

40. A method substantially as herein described with reference to the accompanying drawings.
